# EUROPEAN PATENT SPECIFICATION

(11) **EP 1 083 584 B1**
(45) Date of publication and mention of the grant of the patent: **09.07.2008**
(21) Application number: 00203086.4
(22) Date of filing: 07.09.2000
(51) Int. Cl.: H01H 47/00, H05B 37/02

(54) **Improved switching system**
Verbessertes Schaltsystem
Système de commutation amélioré

(30) Priority: 07.09.1999 NL 1012990; 01.09.2000 NL 1016086
(43) Date of publication of application: 14.03.2001
(73) Proprietor: Verheul, Robert Johan, 2551 DZ Den Haag (NL)
(72) Inventor: Verheul, Robert Johan, 2551 DZ Den Haag (NL)
(74) Representative: Assendelft, Jacobus H.W.

(56) References cited:
- NL-A- 9 000 010

## Description

NL-A-9000010 discloses the principle for the switching system, for switching power consumers, particularly illumination in e.g. office buildings with a modulair design. The modular switching system applies remanent magnetic bi-stable relais of the type wherein the engaging voltage is many times larger than the opposite voltage required for disengaging of the relais. The disengaging voltage is not more than a few Volts with relais with a nominal voltage of 24V. The inventor has determined that this disengaging voltage only varies within a small range, also with large numbers of relais.

The invention is also based on the combination of one or more measurements, features or advantages explicitly or implicitly disclosed by said NL-A. The invention as described further applies the disengaging range which simplifies the cabling of the above illumination switching system.

The relais are of the remanent magnetic type and contain one or more engage- or switch contacts. These bi-stable relais are not polarity sensitive, i.e. if the low opposite voltage for disengaging the relais is raised, the voltage across the relais eventually becomes such that the relais contact closes. The difference between the voltage to engage or disengageamounts many times the disengaging voltage.

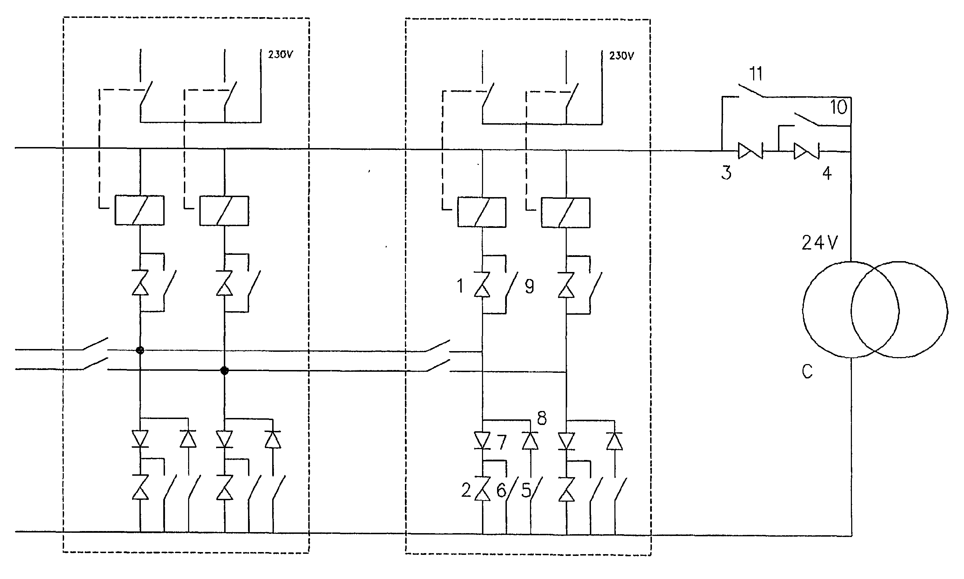

The drawing shows the diagram of two modules and their mutual relation according to the invention for relais with a nominal voltage of 24V. With this switching system illumination can be switched-on and -off locally, i.e. within the office chamber and switched-off centrally in two steps, depending on the position of switch 9.

In the rest mode shown in the drawing, there is no current flow. The zener diodes connected in series have a common zener voltage above the maximum value of the sinus of the supply voltage. In opposite direction diode 7 blocks current flow.

Locally switching-on is obtained by closing contact 5 in the circuit determined by 8, 1, the relais, 3 and 4. All diodes and zener diodes are passed in flow-through direction and provide virtually no resistance. The relais receives almost complete supply voltage and engages.

Locally switching-off is obtained by closing contact 6. Via 4, 3, 1 and 7 the relais receives such a voltage due to bypassing zener diode 2 that the relais disengages.

Centrally switching-off is obtained by closing contact 11. The maximum value of the alternating voltage lowered with the zener voltage of zener diode 2 has a level such that the relais disengages, independent from the position of contact 9.

If in stead of contact 11 contact 10 is closed during centrally switching-off, the relais recieves a voltage equal to the maximum value of the alternating voltage lowered with the threshold voltage of the zener diode 2 and 3 and possibly with the threshold voltage of zener diode 1. The contact 9 determines if this threshold voltage lowers the voltage across the relais. By correct dimensioning of the zener diodes the relais disengages with closed contact 9 and the relais will not disengage if contact 9 is open.

This circuitry offers the opportunity to design a locally operatable switching system with very limited number of wires, wherein the contact 9 devides the relais in two groups such that with a small increase of the voltage by closing contact 10 the first group of relais disengages and by closing contact 11 the voltage is increased such that also the other group of relais disengages. Accordingly it is e.g. possible with one module to switch-off the illumination at the window side, while the interior illumination remains engaged in an office room.

## Claims

1. Electrical switching system with switching modules for switching-on and switching-off at least one power consumer, each module comprising switching contacts within a circuit with the power consumer, designed for switching on and off the electrical power of the power consumer and at least two fourth switching means, provided by a relais to operate the respective switching contact, and wherein the modules locally individually, and centrally in common, can be switched-off by switching means (5, 6, 10, 11), wherein the supply of the switching modules is an alternating voltage and each module furthermore contains at least two zener diodes (1, 2), **characterised in that** the system comprises two zener diodes (3, 4) connected in series, one (4) of which is bridged by a first closable contact (10) and both (3, 4) are bridged by a second closable contact (11) also bridging said first contact (10) to centrally switch off the modules in common and **in that** each module comprises two identical circuits, each with a fourth switching means provided by a relais for switching-on and switching-off a power consumer, such as illumination, and each with a zener diode (1) across which a bypass can be made by third switching means (9), such that by keeping the third switching means (9) of the one circuit closed and keeping the third switching means (9) of the other circuit of the same module opened, the relais of the one circuit disengages at a voltage substantially lower than the voltage at which the relais of the other circuit disengages, when closing first contact (10) and subsequently second contact (11).

2. System according to claim 1, wherein the one or more zener diodes connected in series have a common zener voltage above the maximum value of the supply voltage, which preferably is low voltage and more preferably at least substantially 24V.

3. System according to claim 1 or 2, wherein for locally switching-on a first switching means (5) is present, connected in series with a first diode (8), at least two zener diodes (1, 3, 4) and a relais and connected in parallel with a zener diode (2).

4. System according to claim 1, 2 or 3, wherein for locally switching-off a second switching means (6) is present, connected in series with a second diode (7), at least substantially current blocking in the direction opposite the blocking direction of the first diode (8), at least two zener diodes (1, 3, 4) and a relais and connected in parallel with a zener diode (2).

5. System acoording to claim 3 or 4, wherein said first or second switching means (5, 6) is further connected in parallel with a first (8) and second (7) diode, respectively.

6. System according to any of the preceding claims, wherein it is designed such that for switching-off by operating switching means (5, 6, 9, 10, 11) a bypass is made across at least one zener diode (1, 2, 3, 4).

7. System according to claim 7, wherein said zener diode is connected in series with at least one further zener diode.

8. System according to any of the preceding claims, wherein a circuit comprises at least four zener diodes(1, 2, 3, 4) connected in series wherein for each mutually independently a bypass can be made by switching means.

9. System according to any of claims 1-8, wherein the relais has a single engaging coil and/or the switching modules are supplied by an alternating voltage with possibly different positive and negative amplitude.

## Patentansprüche

1. Schaltsystem mit Schaltmodulen um zumindest eine Stromverbraucher in und aus zu schalten, umfassend: ein Fundierungteil mit eine oder mehrere Saugpfähle für Einbettung ins Meerboden (2); und eine Konstruktion oben diese Fundierungteil, welche ungenügende Schwimmfähigkeit hat um selbsttätig schwimmen zu bleiben, welche Konstruktion ausgeführt ist um auf diese Fundierungteil zu stützen wann die Meerstruktur ins Meerboden installiert worden ist; Schwimmmitteln welche Schwimmfähigkeit liefern sodaß die komplette Struktur über Wasser transportiert werden kann, unabhängig schwimmend, insbesondere in eine aufstehende Position, wobei die benötigte Schwimmfähigkeit zumindest teilweise von die Saugpfähle geliefert wird.

2. Schaltsystem gemäß Anspruch 1, wobei die Schwimmfähigkeit bei den Saugpfählen konzentriert ist, insb. hauptsächlich in Linie mit die Saugpfähle darüber.

3. Schaltsystem gemäß Anspruch 1 oder 2, wobei die Schwimmmitteln so ausgeführt sind, daß wann die Saugpfähle das Meerboden mit ihre Untenseite kontaktieren, zumindest eine Teil der Schwimmmitteln über Wasser stehen.

4. Schaltsystem gemäß eine der Ansprüche 1-3, wobei es höchstens drei Saugpfähle hat, jede an eine Ecke eine gedachte Dreieck.

5. Schaltsystem gemäß eine der Ansprüche 1-4, wobei es ein Teil hat, wie eine Plattform (100), das über das Wasser bleibt nach Installation auf dem Meerboden.

6. Schaltsystem gemäß eine der Ansprüche 1-5, wobei die Saugpfähle ausgestattet sind mit Schwimmmitteln sodaß die Schwimmfähigkeit der komplette Struktur zeitweilig erhöht werden kann mit Hilfe der Saugpfähle.

7. Schaltsystem gemäß eine der Ansprüche 1-6, wobei diese Fundierungteil mit eine oder mehrere Saugpfähle (1) zur einbetten in dem Meerboden.

8. Schaltsystem gemäß eine der Ansprüche 1-7, wobei diese Schwimmfähigkeit liefernde Saugpfähle mit pumpmitteln verbunden sind um Schwimmfähigkeit davon zu handhaben, durch eine Gas zu diese Saugpfähle zu pumpen.

9. Schaltsystem gemäss eine der Ansprüche 1-8, mit: eine Fundierungteil mit eine oder mehrere Saugpfähle (1) für einbettung ins Meerboden (2); eine Konstruktion oben diese Fundierungteil.

## Revendications

1. Système de commutation flottante et auto fonder, flotter dans une corps de l'eau et avec: une pièce de fonder avec une ou plusieurs piles de succion (1) pour encastrer dans la fond de mer (2); et une construction surmonté cet pièce de fonder, cette construction a insufflée force ascensionnelle pour être auto flottante, cette construction est adapté pour fonder sur cette pièce de fonder quand la structure offshore est installé dans la fond de mer; moyens d'ascensionnelle présenter force ascensionnelle pour que la structure globale a force ascensionnelle suffisse que la structure globale peut transporté à l'eau indépendamment flottante, particulièrement dans une position debout; la force ascensionnelle demandé est au moins partiellement présenté par les piles de succion.

2. Système selon la revendication 1, en ce que la force ascensionnelle est concentré à les piles de succion, particulièrement essentiellement, aligné avec les piles de succion et sur les.

3. Système selon la revendication 1 ou 2, en ce que les moyens ascensionnelle sont adapté que quand les piles de succion contacter la fond de mer avec les sous faces, au moins une pièce des moyens ascensionnelle fait saillie sur la face de l'eau.

4. Système selon l'une quelconque des revendications 1-3, en ce que elle a trois piles de succion au maximum, tout à une coin d'une triangle imaginaire, particulièrement en ce que entre les piles de succion une structure de support s'étendre en haut.

5. Système selon l'une quelconque des revendications 3 ou 4, en ce que elle a une pièce, par exemple une plate forme (100) que fait saillie sur la face de l'eau après l'installation sur le fond de mer.

6. Système selon l'une quelconque des revendications 1-5, en ce que les piles de succion sont équipe avec moyens ascensionnelle pour que la force ascensionnelle de la structure globale peut temporellement améliorer à l'aide des piles de succion, par exemple dans un port.

7. Système selon l'une quelconque des revendications 1-6, en ce que cette pièce de fond avec une ou plusieurs piles de succion (1) pour encastrer dans le fond de mer.

8. Système selon l'une quelconque des revendications 1-7, en ce que les piles de succion, présenté cette force ascensionnelle, sont connecter à moyens de pompe pour maintenir la force ascensionnelle, par pomper une gaz à les piles de succion.

9. Système selon l'une quelconque des revendications 1-8, en ce que elle présenté une pièce de fonder avec une ou plusieurs piles de succion (1) pour encastrer dans la fond de mer.
